# EUROPÄISCHE PATENTSCHRIFT

(11) **EP 1 276 571 B1**
(45) Veröffentlichungstag und Bekanntmachung des Hinweises auf die Patenterteilung: **26.05.2004**
(21) Anmeldenummer: 01913522.7
(22) Anmeldetag: 19.01.2001
(51) Int. Cl.: B21C 37/26, F28F 1/36, B23K 9/032

(54) **RIPPENROHR**
GILLED PIPE
TUBE A AILETTES

(30) Priorität: 22.04.2000 DE 10020011
(43) Veröffentlichungstag der Anmeldung: 22.01.2003
(73) Patentinhaber: Bründermann, Georg, 49832 Thuine (DE)
(72) Erfinder: Bründermann, Georg, 49832 Thuine (DE)
(74) Vertreter: Lippert, Stachow, Schmidt & Partner
(86) Internationale Anmeldenummer: PCT/DE2001/000212
(87) Internationale Veröffentlichungsnummer: WO 2001/081022

(56) Entgegenhaltungen:
- EP-A- 0 604 439
- GB-A- 226 175
- US-A- 2 070 539
- US-A- 2 416 865
- US-A- 3 053 971
- US-A- 3 397 440
- US-A- 3 434 533
- US-A- 3 723 693
- US-A- 4 224 984

## Beschreibung

Die Erfindung betrifft ein Verfahren zur Herstellung von Rippenrohren aus Metall, insbesondere von Wärmeaustauscherrohren, wobei einem in Rotation versetzten Rohrkörper mindestens ein die Rippen bildendes, endloses Band tangential zugeführt und auf diesem etwa schraubenlinig aufgewickelt wird, die dem Rohrkörper zugewandte Seite des Bandes mittels einer Elektro-Schweißeinrichtung unter Verwendung eines Zusatzwerkstoffes mit der Rohroberfläche verbunden wird und das Arbeitsende der Schweißeinrichtung in dem freien Keil zwischen der Rohroberfläche und dem aufzuwickelnden Band geführt wird. Ferner betrifft die Erfindung ein nach diesem Verfahren gefertigtes Rippenrohr.

Ein Verfahren der genannten Art ist aus der EP 0 604 439 B1 bekannt. Bei diesem bekannten Verfahren wird das Band in vertikaler Anordnung dem rotierenden Rohrkörper zugeführt und die dem Rohrkörper zugewandte Schmalseite des Bandes wird an die Oberfläche des Rohrkörpers angeschweißt. Dabei wird die Schweißeinrichtung unter dem gleichen Winkel relativ zur Rohrachse geführt wie das zuzuführende, die Rippen bildende Band. Die Schweißraupe wird dabei so breit gewählt, wie die Dicke des Bandes.

Mit diesem bekannten Verfahren lassen sich bereits sehr gute Ergebnisse erzielen und es ist auch ein äußerst schnelles und effizientes Arbeiten möglich.

Aus der US-A-3397444 sind Wärmeaustauscherrohre mit vergrößerter Oberfläche sowie Verfahren zu deren Herstellung bekannt. Gemäß dem Ausführungsbeispiel aus den Figuren 19 bis 27 wird ein Produkt hergestellt, bei dem auf das Trägerrohr ein Band aufgewickelt wird, welches an einer oder auch an beiden Seiten kammartige Zähne aufweist. Bei diesem Verfahren werden keine erheblichen Verformungen des aufzubringenden Bandes vorgenommen, wie sie bei dem Erfindungsgegenstand erforderlich sind, sondern es wird lediglich der flache Teil des jeweiligen Bandes auf den Rohrkörper aufgewickelt, während zur Herstellung der Rippen keine Verformungskräfte erforderlich sind, da sich die Kammzähne leicht auffächern lassen.

Auch das Befestigen der Bandrückenseite an dem Rohrkörper erfolgt nicht über eine Elektro-Schweißverfahren, sondern dadurch, dass aus einer Düse geschmolzenes Material zwischen die Rohrwand und die Rückseite des Bandes gespritzt wird. Der Erfindung liegt die Aufgabe zugrunde, das aus der EP 0 604 439 B1 bekannte Verfahren noch weiter zu optimieren und insbesondere die Fertigungsleistung zu erhöhen sowie die Qualität des zu fertigenden Rippenrohrs zu steigern.

Erfindungsgemäß wird diese Aufgabe dadurch gelöst, dass an das die Rippen bildende Band vor dem Aufwickeln auf den Rohrkörper ein etwa rechtwinklig abgebogener Steg angeformt wird, dass der Steg beim Aufwickeln des Bandes auf den Rohrkörper flach auf den Rohrkörper geführt wird, während der etwa rechtwinklig dazu angeordnete Schenkel die Rippen bildet, dass die Schweißung in dem Bereich des freien Keils zwischen der Rohrkörperoberfläche und der zur Rohrkörperoberfläche weisenden Auflagefläche des Stegs erfolgt, dass während des Schweißvorgangs sowohl die Oberfläche des Rohrkörpers als auch die mit dieser zu verschweißende Auflagefläche des Stegs aufgeschmolzen werden und dass die mittels des Zusatzwerkstoffs erzeugte Schweißnaht schmaler ausgebildet wird als die Breite des Stegs.

Durch die vergrößerte Fläche zwischen Rippe und Rohr kann mit einem dickeren Draht geschweißt werden, wodurch die Verwendung eines höheres Schweißstroms möglich ist. Aufgrund des höheren Schweißstroms kann die Schweißgeschwindigkeit erhöht werden, so dass die Herstellungsleistung erheblich verbessert werden kann. Leistungsverbesserungen bis zu 50 % sind möglich.

Bei einem besonders bevorzugten Ausführungsbeispiel des erfindungsgemäßen Verfahrens wird das die Rippen bildende Band vor dem Aufwickeln auf den Rohrkörper U-förmig gebogen, wobei der zwischen den beiden U-Schenkeln verlaufende, ebenflächig ausgebildete Steg flach auf den Rohrkörper geführt wird und die beiden etwa rechtwinklig dazu angeordneten U-Schenkel die Rippen bilden.

Bei Anwendung dieses Verfahrens können bei einer Umdrehung der Hohlkörpers zwei Rippen gleichzeitig angeschweißt werden, wodurch sich nochmals eine Verdoppelung der Herstellungsleistung ergibt.

Eine weitere Verbesserung der Schweißleistung sowie auch eine Verbesserung der Schweißqualität kann dadurch erzielt werden, dass die Auflagefläche des Stegs vor der Verschweißung profiliert wird. Eine solche Profilierung kann beispielsweise in Form von Längsrippen, Querrippen oder Noppen vorgenommen werden. Durch eine solche Profilierung kann die Schweißverbindung intensiviert werden, denn bei der hohen Arbeitsgeschwindigkeit ist es sehr wichtig, eine Schweißnaht zu erzielen, die insbesondere im Übergangsbereich zu den miteinander zu verbindenden Teilen einwandfrei ausgebildet ist.

Bei einer weiteren bevorzugten Ausführungsform des Verfahrens wird der Steg vor der Verschweißung mit einer von seiner Auflagefläche weg gerichteten Wölbung versehen. Diese Wölbung kann zur Führung der Schweißnaht ausgenutzt werden, so dass dadurch weitgehend einem seitlichen Ausbrechen der Schweißnaht entgegengewirkt werden kann.

Die Schweißnaht ist zweckmäßig schmaler ausgebildet als die Breite des Stegs, so dass die Schweißnaht seitlich nicht über den Steg vorsteht. Aufgrund des guten Schweißergebnisses, welches bei Anwendung des erfindungsgemäßen Verfahrens erzielt werden kann, kommt man mit einer relativ schmalen Schweißnaht aus, wodurch nicht nur die Arbeitsgeschwindigkeit erhöht, sondern auch Zusatzwerkstoff eingespart werden kann.

Während des Schweißvorgangs kann bei Anwendung des erfindungsgemäßen Verfahrens sowohl die Oberfläche des Rohrkörpers als auch die mit dieser zu verschweißende Auflagefläche des Stegs aufgeschmolzen werden. Dadurch wird eine intensive Verschweißung der beiden miteinander zu verbindenden Teile erzielt.

Alternativ ist es jedoch auch möglich, ebenso wie bei dem beschriebenen bekannten Verfahren mit Hilfe der Schweißeinrichtung unter Verwendung des Zusatzwerkstoffs auf der Rohroberfläche vor dem Auftreffen des anzuschweißenden Stegs eine Schweißraupe aufzubringen, die genau in dem Verbindungsbereich des Stegs mit der Rohroberfläche verläuft, wobei der Steg anschließend in die noch flüssige Schweißraupe gedrückt wird.

Bei sämtlichen Anwendungen des erfindungsgemäßen Verfahrens sollte die Schweißeinrichtung unter dem gleichen Winkel zur Achse des Rohrkörpers geführt werden, wie das zugeführte, die Rippen bildende Band.

Zur weiteren Verbesserung der Schweißqualität kann der Steg unmittelbar nach der Verschweißung zumindest kurzzeitig fest gegen den Rohrkörper gedrückt werden. Bei dem bekannten Verfahren, bei dem das Rippenband keinen Steg aufweist, ist ein Andrücken nicht bzw. nur unter erschwerten Bedingungen möglich.

Das erfindungsgemäße Rippenrohr, welches aus dem zylindrischen Rohrkörper sowie einem schraubenlinig auf diesem aufgewickelten Band besteht, weist vorzugsweise das Merkmal auf, dass an dem Band ein parallel zur Rohrkörperoberfläche verlaufender Steg vorgesehen ist, wobei die Auflagefläche des Stegs mit der Rohrkörperoberfläche verschweißt ist und dass die aus einem Zusatzwerkstoff bestehende Schweißnaht schmaler ausgebildet ist als die Stegbreite.

Vorzugsweise ist die Auflagefläche des Stegs mit einer Profilierung versehen, und zwar beispielsweise in Form von Längsrippen, Querrippen, oder in Form von Noppen.

Der Steg kann ferner eine von seiner Auflagefläche wegweisende Wölbung aufweisen, mit der ein definierter Aufnahmeraum für die Schweißnaht gebildet wird.

Das Band kann L-förmig gebogen sein, wobei der an dem Steg vorgesehene Schenkel die Rippen bildet.

Vorzugsweise ist das Band U-förmig gebogen, wobei die an dem Steg vorgesehenen Schenkel im Abstand der Rippen angeordnet sind.

Der Abstand zwischen zwei U-Schenkeln benachbarter Bandwindungen entspricht vorzugsweise dem Schenkelabstand des Bandes, so dass der Rippenabstand des fertigen Rippenrohrs konstant ist.

Die Erfindung ist in der Zeichnung beispielsweise veranschaulicht und nachstehend im einzelnen anhand der Zeichnung beschrieben. Es zeigen:
- Fig. 1: in schematischer Darstellung eine perspektivische Ansicht einer Herstellungsvorrichtung, mit der das erfindungsgemäße Verfahren praktizierbar ist,
- Fig. 2: in vergrößerter Darstellung einen Ausschnitt II der Vorrichtung mit einer Walzeneinrichtung,
- Fig. 3: einen Schnitt entlang der Linie III-III aus Fig. 2,
- Fig. 4: einen Schnitt entlang der Linie IV-IV aus Fig. 2,
- Fig. 5: einen Schnitt entlang der Linie V-V aus Fig. 2,
- Fig. 6: in vergrößerter Darstellung einen Schnitt durch das Rippenrohr gemäß Fig. 1 im Bereich der Schweißeinrichtung,
- Fig. 7: einen Schnitt entlang der Linie VII-VII aus Fig. 6,
- Fig. 8: einen Schnitt entlang der Linie VIII-VIII aus Fig. 6,
- Fig. 9: einen Schnitt entlang der Linie IX-IX aus Fig. 6,
- Fig. 10: einen Abschnitt des Rippenrohrs mit mehreren bereits fertig verschweißten Rippen,
- Fig. 11: in vergrößerter Darstellung einen Schnitt durch ein weiteres Ausführungsbeispiel der U-förmigen Rippenausbildung und
- Fig. 12: eine weitere Variation für die Rippenausbildung.

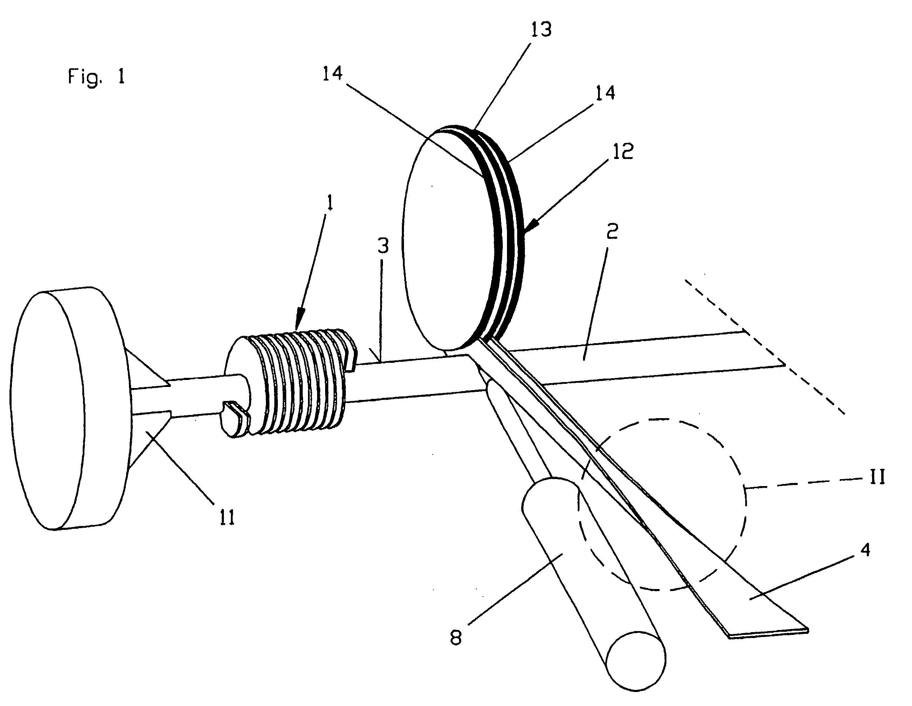

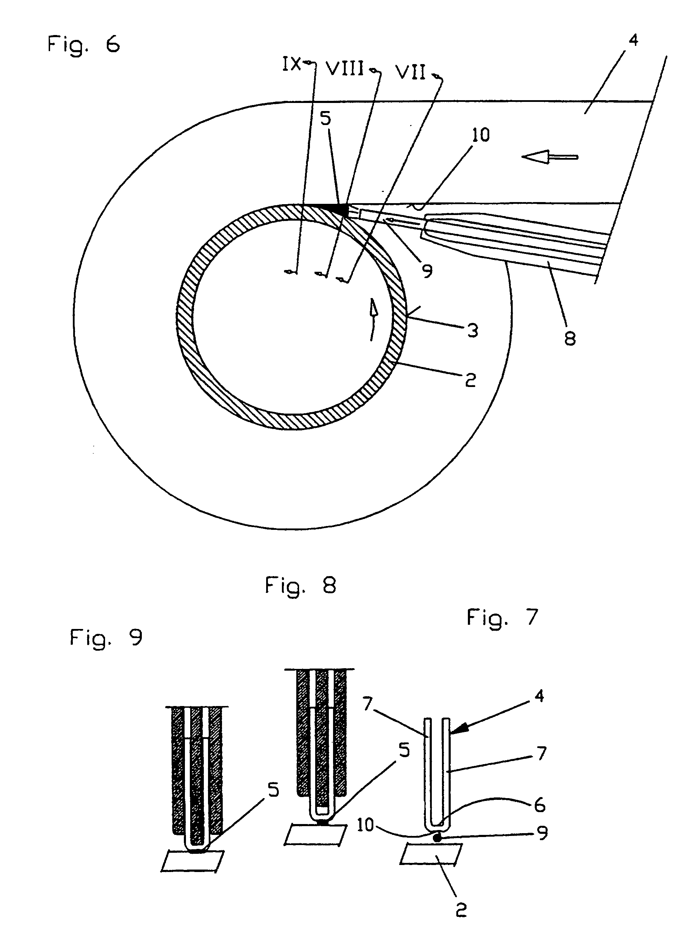

Nach Fig. 1 der Zeichnung besteht das Rippenrohr 1, welches insbesondere als wärmeaustauscherrohr vorgesehen ist, aus einem Rohrkörper 2, auf dessen Oberfläche 3 ein von einer in der Zeichnung nicht dargestellten Vorratsrolle zu entnehmendes Rippenband 4 zwecks Vergrößerung der Wärmeaustauschfläche wendelförmig aufgebracht und mit der Rohroberfläche 3 über eine Schweißnaht 5 verbunden wird, wie insbesondere in den Figuren 6 bis 9 dargestellt.

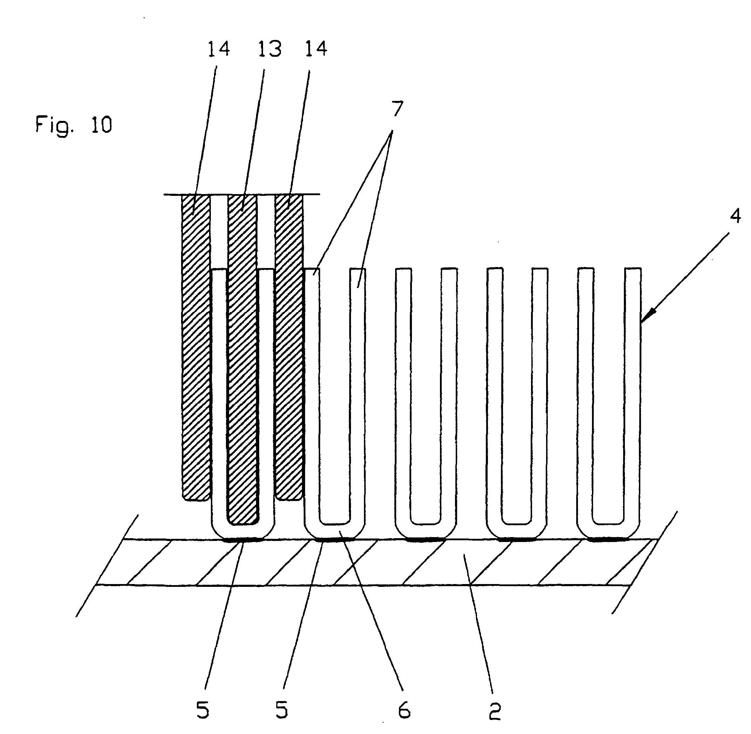

Wie insbesondere aus Fig. 1 und Fig. 10 zu erkennen ist, weist das Rippenband 4, welches über die Schweißnaht 5 mit dem Rohrkörper 2 verbunden wird, eine U-förmige Gestalt auf, wobei der U-Steg 6 mittels der Schweißnaht 5 mit dem Rohrkörper 2 verbunden wird, während die beiden U-Schenkel 7 die Rippen bilden.

Wie in den Figuren 1 bis 5 zu erkennen ist, wird das Rippenband 4 von einer in der Zeichnung nicht dargestellten Bandrolle abgespult und wird dann in dem in Fig. 1 dargestellten Bereich II unmittelbar vor dem Anschweißen an den Rohrkörper 2 in die U-Form gebogen.

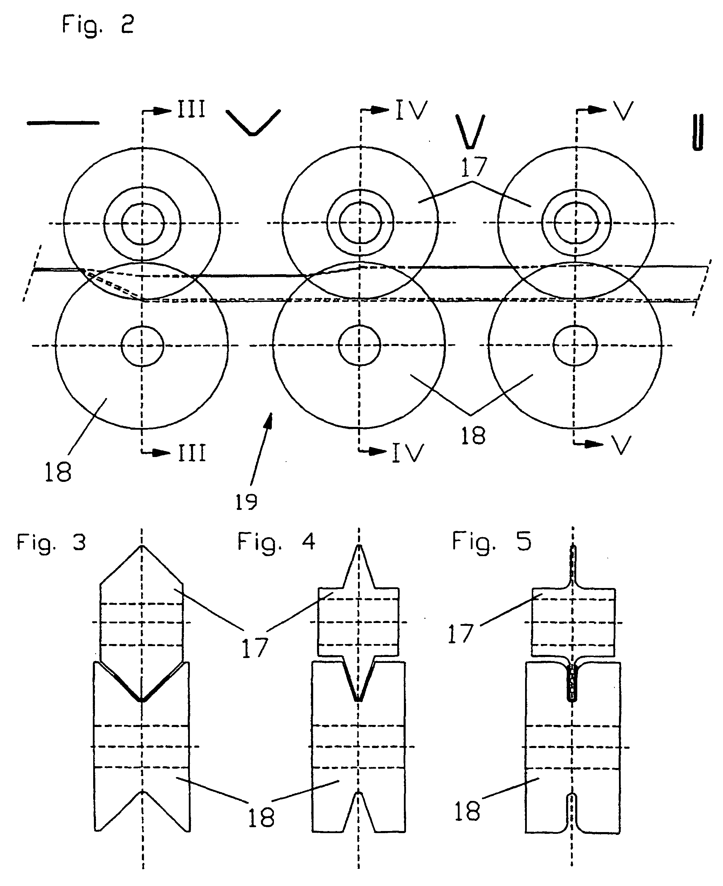

Das Biegen geschieht bei dem in Fig. 2 dargestellten Ausführungsbeispiel der Vorrichtung in drei Stufen, wobei in der ersten Stufe gemäß Fig. 3 ein flaches V, in der zweiten Stufe gemäß Fig. 4 ein steiles V und schließlich in der dritten Stufe gemäß Fig. 5 das U fertig gebogen wird, welches dann gemäß Fig. 1 tangential auf den Rohrkörper 2 aufläuft. Selbstverständlich kann auch eine abweichende Anzahl von Verformungsstufen vorgesehen sein.

Wie insbesondere aus Fig. 6 zu ersehen ist, wird das Rippenband 4, bzw. dessen U-Steg 6 unmittelbar vor dem Auftreffen auf den Rohrkörper 2 mittels einer Schweißeinrichtung 8 auf die Rohroberfläche 3 aufgeschweißt. Die Schweißung erfolgt mittels eines Zusatzwerkstoffes, der in Form eines endlosen Schweißdrahtes 9 automatisch zugeführt wird. Die Schweißstelle liegt in dem Bereich des freien Keils zwischen der Rohroberfläche 3 und der zur Rohroberfläche weisenden Auflagefläche 10 des U-Stegs 6.

Wie aus Fig. 1 zu ersehen ist, gehören zu der Herstellvorrichtung ferner eine Einspanneinrichtung 11, in der der Rohrkörper 2 eingespannt ist sowie eine nicht näher dargestellten Antriebseinrichtung für die Einspanneinrichtung 11 zum Drehen des Rohrkörpers 2 um seine Längsachse. Weiterhin ist ein nicht näher dargestellter Support vorgesehen, der die bereits beschriebene Schweißeinrichtung 8, die Bandrolle, von der das Rippenband 4 abgespult werden kann, eine Rolleneinrichtung 12 sowie die in Fig. 2 bis 5 dargestellte Walzeinrichtung 19 mit Oberwalzen 17 und Unterwalzen 18 trägt. Der Support und der Rohrkörper 2 sind relativ zueinander in Richtung der Längsachse des Rohrkörpers 2 verschiebbar, wobei sowohl der Rohrkörper 2 als auch der Support beweglich geführt sein kann.

Wie insbesondere aus Fig. 1 zu erkennen ist, besteht die Rolleneinrichtung 12 aus drei konzentrischen Rollen, und zwar einer mittleren Druckrolle 13 und zwei seitlichen Führungsrollen 14. Gemäß Fig. 10 weist die mittlere Druckrolle 13 den größten Durchmesser auf und greift während des Herstellungsprozesses zwischen die U-Schenkel 7 und drückt den U-Steg 6 fest gegen die Schweißnaht. Die beiden seitlichen Führungsrollen 14 weisen einen etwas geringeren Durchmesser auf und befinden sich dadurch in einem gewissen Abstand von der Schweißstelle 5, so dass sie durch die Schweißhitze sowie das Schweißmaterial nicht angegriffen werden.

Der Abstand zwischen der Druckrolle 13 und der jeweiligen Führungsrolle 14 entspricht etwa der Materialstärke des Rippenbandes 4, so dass die U-Schenkel, die während des Aufrollens auf den Rohrkörper 2 einem erheblichen Verformungsgrad ausgesetzt sind, sicher geführt werden.

Die Rolleneinrichtung 12 mit ihrer Druckrolle 13 und den Führungsrollen 14 ist ein sehr wichtiges Instrument, um ein einwandfreies Aufbringen des Rippenbandes 4 auf den Rohrkörper 2 zu gewährleisten.

Wie insbesondere auch den Figuren 6 bis 9 hervorgeht, wird zunächst eine relativ schmale Schweißnaht 5 in dem Keil zwischen der Auflagefläche 10 des U-Stegs 6 und der Rohroberfläche 3 erzeugt, die dann beim weiteren Aufwickeln des Rippenbandes 4 durch Unterstützung der mittleren Druckrolle 13 breitgedrückt wird, wie in Fig. 7 bis 9 dargestellt. Das Volumen der Schweißnaht 5 ist dabei so gewählt, dass sich im Endzustand, wie beispielsweise in Fig. 9 dargestellt, eine Schweißstelle bildet, die über ihre gesamte Breite eine etwa konstante, vergleichsweise geringe Dicke aufweist. Die Schweißstelle bzw. Schweißnaht 5 ist schmaler als die Breite des U-Stegs 6, so dass die Schweißnaht seitlich nicht über den U-Steg 6 vorspringt. Dadurch entsteht ein sauberes Schweißbild und es wird nur relativ wenig Schweiß-Zusatzwerkstoff benötigt.

Zur Verbesserung der Schweißverbindung können noch zusätzliche Maßnahmen ergriffen werden, indem beispielsweise die Auflagefläche 10 des U-Stegs 6 in eine besondere Form gebracht wird.

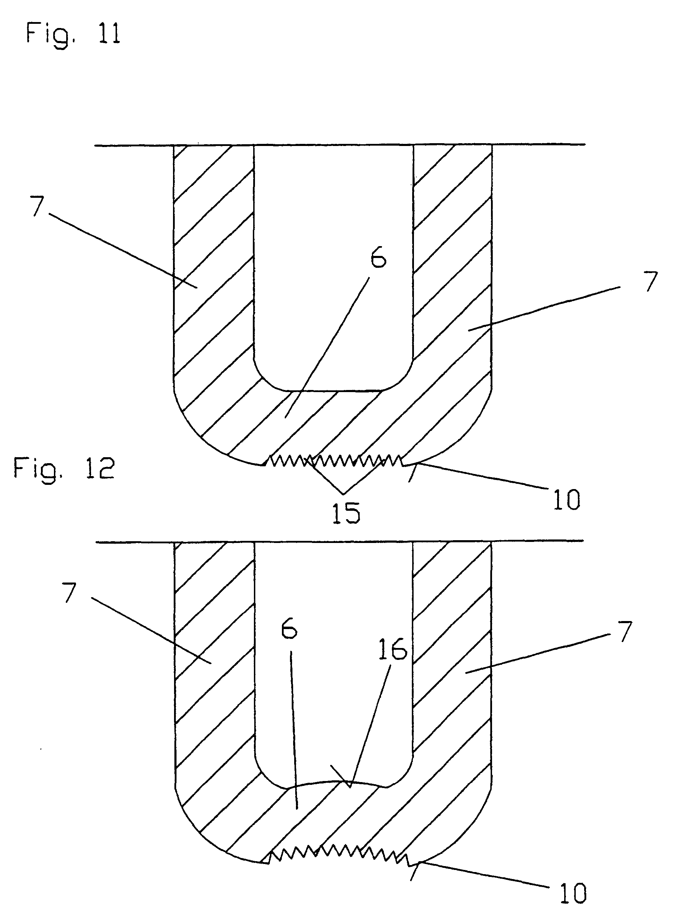

Wie beispielsweise aus Fig. 11 hervorgeht, ist die Auflagefläche 10 des U-Stegs 6 mit einer Profilierung versehen, wobei die Profilierung in Form von Längsrippen 15 ausgebildet ist.

Die Längsrippen 15 werden während des Herstellvorgangs in der Walzeinrichtung 19 mittels der Walzen 17 und 18 eingewalzt.

Wie in Fig. 12 dargestellt ist, kann der U-Steg 6 mit einer Wölbung 16 versehen werden, die von der Auflagefläche 10 aus nach oben gerichtet ist. Aufgrund der Wölbung 16 entsteht im Bereich der Auflagefläche 10 ein Hohlraum, der die Schweißnaht seitlich begrenzt und führt sowie ein Ausbrechen der Schweißnaht nach außen verhindert.

Wie aus Fig. 6 hervorgeht, wird bei dem dort dargestellten Ausführungsbeispiel die Schweißnaht sehr weit hinten in dem freien Teil zwischen der Auflagefläche 10 des U-Stegs 6 und der Rohroberfläche 3 ausgeführt, so dass sowohl die Oberfläche des Rohrkörpers 2 als auch die Auflagefläche 10 des Stegs aufgeschmolzen werden, wodurch eine sehr innige Schweißverbindung entsteht.

Aufgrund der vergrößerten Fläche zwischen der Rohroberfläche 3 und dem U-Steg 6 kann mit einem relativ dicken Schweißdraht 9 gearbeitet werden, der bis zu 1,6 mm, eventuell auch darüber, dick sein kann. Durch einen solchen Schweißdraht lassen sich relativ hohe Schweißströme in der Größenordnung von 300 Ampere bis 800 Ampere führen.

Da nur eine Schweißnaht mit relativ geringem Querschnitt benötigt wird, kann mit dem hohen Schweißstrom eine sehr hohe Schweißgeschwindigkeit erzielt werden, die bis zu 50 % höher liegt als bei vergleichbaren Verfahren.

Aufgrund der U-förmigen Gestalt des Rippenbandes werden mit einer Schweißnaht gleichzeitig zwei Rippen aufgebracht, wodurch die Herstellgeschwindigkeit nochmals verdoppelt werden kann.

Die Herstellvorrichtung ist aufgrund ihrer Konstruktionsweise sehr robust und weniger störanfällig als bekannte Vorrichtungen, denn die Druckrolle 13 ist durch das sie umgebende U-Profil völlig geschützt und auch die Führungsrollen 14, die nicht bis zu der Schweißstelle reichen, werden nicht durch Schweißspritzer verunreinigt, so dass die Rollen 13 und 14 nur relativ selten gewechselt werden müssen und somit nur geringe Stillstandszeiten auftreten.

Insbesondere ist noch die Qualität der Schweißnaht hervorzuheben, die durch die Funktion der Druckrolle 13 eine sehr gleichmäßige Verteilung über die Breite des U-Stegs 6 erfährt.

Auf diese Weise ist auch das hergestellte Produkt, nämlich das fertige Rippenrohr 1, von sehr hoher Qualität und guter Effizienz bezüglich der Wärmeübertragung vom Inneren des Rohrkörpers 2 zu den Rippen.

Das beschriebene Verfahren, die dargestellte Vorrichtung sowie das Rippenrohr 1 sind keinesfalls auf die vorgestellte Ausführungsform beschränkt. Gute Ergebnisse werden auch dann erzielt, wenn anstelle des U-förmigen Rippenbandes ein L-förmiges Rippenband auf den Rohrkörper 2 aufgeschweißt wird, wobei dann allerdings lediglich neben der Druckrolle 13 eine einzige Führungsrolle 14 benötigt würde.

### Bezugszeichenliste

- 1: Rippenrohr
- 2: Rohrkörper
- 3: Rohroberfläche
- 4: Rippenband
- 5: Schweißnaht
- 6: U-Steg
- 7: U-Schenkel
- 8: Schweißeinrichtung
- 9: Schweißdraht
- 10: Auflagefläche
- 11: Einspanneinrichtung
- 12: Rolleneinrichtung
- 13: Druckrolle
- 14: Führungsrollen
- 15: Längsrippen
- 16: Wölbung
- 17: Oberwalzen
- 18: Unterwalzen
- 19: Walzeinrichtung

## Patentansprüche

1. Verfahren zur Herstellung von Rippenrohren aus Metall, insbesondere von Wärmeaustauscherrohren, wobei einem in Rotation versetzten Rohrkörper mindestens ein die Rippen bildendes, endloses Band tangential zugeführt und auf diesem etwa schraubenlinig aufgewickelt wird, die dem Rohrkörper zugewandte Seite des Bandes mittels einer Elektro-Schweißeinrichtung unter Verwendung eines Zusatzwerkstoffes mit der Rohroberfläche verbunden wird und das Arbeitsende der Schweißeinrichtung in dem freien Keil zwischen der Rohroberfläche und dem aufzuwickelnden Band geführt wird, **dadurch gekennzeichnet, dass** an das die Rippen bildende Band (4) vor dem Aufwickeln auf den Rohrkörper (2) ein etwa rechtwinklig abgebogener Steg angeformt wird, dass der Steg beim Aufwickeln des Bandes (4) auf den Rohrkörper (2) flach auf den Rohrkörper (2) geführt wird, während der etwa rechtwinklig dazu angeordnete Schenkel die Rippen bildet, dass die Schweißung in dem Bereich des freien Keils zwischen der Rohrkörperoberfläche (3) und der zur Rohrkörperoberfläche weisenden Auflagefläche (10) des Stegs (6) erfolgt, dass während des Schweißvorgangs sowohl die Oberfläche (3) des Rohrkörpers (2) als auch die mit dieser zu verschweißende Auflagefläche (10) des Stegs (6) aufgeschmolzen werden und dass die mittels des Zusatzwerkstoffs erzeugte Schweißnaht (5) schmaler ausgebildet wird als die Breite des Stegs (6).

2. Verfahren nach Anspruch 1, **dadurch gekennzeichnet, dass** das die Rippen bildende Band (4) vor dem Aufwickeln auf den Rohrkörper (2) U-förmig gebogen wird und dass der zwischen den U-Schenkeln (7) verlaufende, etwa ebenflächig ausgebildete U-Steg (6) flach auf den Rohrkörper (2) geführt wird, während die beiden etwa rechtwinklig dazu angeordneten U-Schenkel (7) die Rippen bilden.

3. Verfahren nach Anspruch 1 oder 2, **dadurch gekennzeichnet, dass** die Auflagefläche (10) des Stegs (6) vor der Verschweißung profiliert wird.

4. Verfahren nach Anspruch 3, **dadurch gekennzeichnet, dass** als Profilierung Längsrippen (15) eingebracht werden.

5. Verfahren nach Anspruch 3, **dadurch gekennzeichnet, dass** als Profilierung Querrippen angebracht werden.

6. Verfahren nach Anspruch 3, **dadurch gekennzeichnet, dass** als Profilierung Noppen eingebracht werden.

7. Verfahren nach einem der Ansprüche 1 bis 6, **dadurch gekennzeichnet dass** der Steg (6) vor der Verschweißung mit einer von seiner Auflagefläche weg gerichteten Wölbung (16) versehen wird.

8. Verfahren nach einem der Ansprüche 1 bis 7, **dadurch gekennzeichnet, dass** mit Hilfe der Schweißeinrichtung unter Verwendung des Zusatzwerkstoffs auf der Rohroberfläche (3) vor dem Auftreffen des anzuschweißenden Stegs (6) eine Schweißraupe aufgebracht wird, die genau in dem Verbindungsbereich des Stegs mit der Rohrkörperoberfläche verläuft, und dass der Steg in die noch flüssige Schweißraupe gedrückt wird.

9. Verfahren nach einem der Ansprüche 1 bis 8, **dadurch gekennzeichnet, dass** die Schweißeinrichtung (8) etwa unter dem gleichen Winkel zur Achse des Rohrkörpers geführt wird wie das zugeführte, die Rippen bildende Band (4).

10. Verfahren nach einem der Ansprüche 1 bis 9, **dadurch gekennzeichnet, dass** der Steg (6) unmittelbar nach der Verschweißung zumindest kurzzeitig fest gegen den Rohrkörper (2) gedrückt wird.

11. Rippenrohr aus Metall, insbesondere Wärmeaustauscherrohr, bestehend aus einem zylindrischen Rohrkörper (2) sowie einem schraubenlinig auf diesen aufgewickelten Band (4), welches mittels einer Schweißnaht, die durch eine Elektro-Schweißeinrichtung unter Verwendung eines Zusatzwerkstoffs erzeugt wird, mit der Rohroberfläche verbunden ist, **dadurch gekennzeichnet, dass** an dem Band (4) ein parallel zur Rohrkörperoberfläche verlaufender Steg (6) vorgesehen ist, dass die Auflagefläche (10) des Stegs (6) mit der Rohrkörperoberfläche (3) verschweißt ist, und dass die aus dem Zusatzwerkstoff bestehende Schweißnaht (5) schmaler als die Stegbreite ist.

12. Rippenrohr nach Anspruch 11, **dadurch gekennzeichnet, dass** die Auflagefläche (10) des Stegs (6) eine Profilierung aufweist.

13. Rippenrohr nach Anspruch 12, **dadurch gekennzeichnet, dass** als Profilierung Längsrippen (15) vorgesehen sind.

14. Rippenrohr nach Anspruch 12, **dadurch gekennzeichnet, dass** als Profilierung Querrippen vorgesehen sind.

15. Rippenrohr nach Anspruch 12, **dadurch gekennzeichnet, dass** als Profilierung Noppen vorgesehen sind.

16. Rippenrohr nach einem der Ansprüche 11 bis 15, **dadurch gekennzeichnet, dass** der Steg (6) mit einer von seiner Auflagefläche (10) weg weisenden Wölbung (16) versehen ist.

17. Rippenrohr nach einem der Ansprüche 11 bis 16, **dadurch gekennzeichnet, dass** das Band L-förmig gebogen ist, wobei der an dem Steg vorgesehene Schenkel die Rippe bildet.

18. Rippenrohr nach einem der Ansprüche 11 bis 16, **dadurch gekennzeichnet, dass** das Band (4) U-förmig gebogen ist und dass die an dem U-Steg (6) vorgesehenen U-Schenkel (7) im Abstand der Rippen angeordnet sind.

19. Rippenrohr nach Anspruch 18, **dadurch gekennzeichnet, dass** der Abstand zwischen zwei U-Schenkeln (7) benachbarter Bandwindungen dem Schenkelabstand des Bandes (4) entspricht.

## Claims

1. Method for producing gilled metal pipes, particularly heat exchanger pipes, where at least one continuous, gill-forming strip is applied to a rotating pipe body at a tangent and wound onto the pipe body in an approximately helical line, the side of the strip facing the pipe body is connected to the pipe surface by means of an electric welding device using an additional material, and the working end of the welding device is guided in the open wedge between the pipe surface and the winding strip, **characterised in that** a web is bent at roughly right angles on the strip (4) that forms the gills before said strip is wound onto the pipe body (2), **in that** the web is guided flat on the pipe body (2) during winding of the strip (4) onto the pipe body (2), while the leg positioned roughly at a right angle thereto forms the gills, **in that** welding is carried out in the region of the open wedge between the pipe body surface (3) and the contact surface (10) of the web (6) facing the pipe body surface, **in that** both the surface (3) of the pipe body (2) and the contact surface (10) of the web (6) to be welded to it are fused during the welding process, and **in that** the weld (5) produced using the additional material is narrower than the width of the web (6).

2. Method according to Claim 1, **characterised in that** the strip (4) forming the gills is bent into U-shape prior to winding onto the pipe body (2), and **in that** the roughly flat U-web (6) between the U-legs (7) is guided flat on the pipe body (2), while the two U-legs (7) positioned roughly at a right angle thereto form the gills.

3. Method according to Claim 1 or 2, **characterised in that** the contact surface (10) of the web (6) is profiled prior to welding.

4. Method according to Claim 3, **characterised in that** longitudinal ribs (15) are formed as the profile.

5. Method according to Claim 3, **characterised in that** transverse ribs are formed as the profile.

6. Method according to Claim 3, **characterised in that** nubs are formed as the profile.

7. Method according to one of Claims 1 to 6, **characterised in that** the web (6) is provided with a bulge (16) facing away from its contact surface prior to welding.

8. Method according to one of Claims 1 to 7, **characterised in that**, with the help of the welding device and using the additional material, a welding bead is applied to the pipe surface (3) precisely in the connecting area between the web and the pipe body surface, before the web (6) to be welded contacts it, and **in that** the web is pressed into the still-molten welding bead.

9. Method according to one of Claims 1 to 8, **characterised in that** the welding device (8) is guided at roughly the same angle to the axis of the pipe body as the feed strip (4) that forms the gills.

10. Method according to one of Claims 1 to 9, **characterised in that** the web (6) is firmly pressed at least briefly against the pipe body (2) immediately after welding.

11. Gilled metal pipe, particularly a heat exchanger pipe, comprising a cylindrical pipe body (2) and a strip (4) wound onto it in a helical line, which is connected to the pipe surface by means of a weld produced with an electric welding device and using an additional material, **characterised in that** the strip (4) is provided with a web (6) running parallel to the pipe body surface, **in that** the contact surface (10) of the web (6) is welded to the pipe body surface (3), and **in that** the weld (5), consisting of additional material, is narrower than the width of the web.

12. Gilled pipe according to Claim 11, **characterised in that** the contact surface (10) of the web (6) is profiled.

13. Gilled pipe according to Claim 12, **characterised in that** longitudinal ribs (15) are provided as the profile.

14. Gilled pipe according to Claim 12, **characterised in that** transverse ribs are provided as the profile.

15. Gilled pipe according to Claim 12, **characterised in that** nubs are provided as the profile.

16. Gilled pipe according to one of Claims 11 to 15, **characterised in that** the web (6) is provided with a bulge (16) pointing away from its contact surface (10).

17. Gilled pipe according to one of Claims 11 to 16, **characterised in that** the strip is bent in L-shape, where the leg provided on the web forms the gills.

18. Gilled pipe according to one of Claims 11 to 16, **characterised in that** the strip (4) is bent in U-shape, and **in that** the U-legs (7) provided on the U-web (6) are the same distance apart as the gills.

19. Gilled pipe according to Claim 18, **characterised in that** the distance between two U-legs (7) of adjacent strip winds corresponds to the distance between the legs of the strip (4).

## Revendications

1. Procédé de fabrication de tubes à ailettes en métal, en particulier de tubes pour échangeur de chaleur, sachant qu'au moins une bande sans fin formant les ailettes est amenée de façon tangentielle à un corps de tube entraîné en rotation et enroulée sur celui-ci approximativement en hélice, le côté de la bande tourné vers le corps de tube est relié à la surface du tube au moyen d'un dispositif à souder électrique en utilisant un métal d'apport et l'extrémité de travail du dispositif à souder est guidée dans le coin libre entre la surface du tube et la bande à enrouler, **caractérisé en ce qu'**une nervure coudée approximativement à angle droit est formée sur la bande (4) formant les ailettes avant l'enroulement sur le corps de tube (2), **en ce que** la nervure est guidée à plat sur le corps de tube (2) lors de l'enroulement de la bande (4) sur le corps de tube (2) tandis que la branche disposée approximativement à angle droit sur celle-ci forme les ailettes, **en ce que** la soudure s'effectue dans la zone du coin libre entre la surface (3) du corps de tube et la surface de support (10) de la nervure (6) dirigée vers la surface du corps de tube, **en ce que**, pendant le procédé de soudage, aussi bien la surface (3) du corps de tube (2) que la surface de support (10) de la nervure (6) devant être soudée sur celle-ci sont ouvertes par fusion, et **en ce que** le cordon de soudure (5) produit au moyen du métal d'apport est plus étroit que la largeur de la nervure (6).

2. Procédé selon la revendication 1, **caractérisé en ce que** la bande (4) formant les ailettes est coudée en forme de U avant l'enroulement sur le corps de tube (2) et **en ce que** la nervure en U (6), réalisée approximativement dans une surface plane, qui s'étend entre les branches du U (7), est guidée à plat sur le corps de tube (2), tandis que les deux branches du U (7) agencées approximativement à angle droit sur celui-ci forment les ailettes.

3. Procédé selon l'une quelconque des revendications 1 ou 2, **caractérisé en ce que** la surface de support (10) de la nervure (6) est profilée avant le soudage.

4. Procédé selon la revendication 3, **caractérisé en ce que** des ailettes longitudinales (15) sont installées en tant que profilage.

5. Procédé selon la revendication 3, **caractérisé en ce que** des ailettes transversales sont installées en tant que profilage.

6. Procédé selon la revendication 3, **caractérisé en ce que** des nodules sont installés en tant que profilage.

7. Procédé selon l'une quelconque des revendications 1 à 6, **caractérisé en ce que** la nervure (6) est pourvue avant le soudage d'un bombement (16) dirigé à l'opposé de sa surface de support.

8. Procédé selon l'une quelconque des revendications 1 à 7, **caractérisé en ce qu'**une passe de soudure est installée sur la surface (3) du tube à l'aide du dispositif à souder en utilisant le métal d'apport avant l'apposition de la nervure (6) à souder, laquelle passe s'étend précisément dans la zone de jonction de la nervure avec la surface du corps de tube, et **en ce que** la nervure est pressée dans la passe de soudure encore liquide.

9. Procédé selon l'une quelconque des revendications 1 à 8, **caractérisé en ce que** le dispositif à souder (8) est guidé approximativement dans le même axe par rapport au corps de tube que la bande (4) amenée pour former les ailettes.

10. Procédé selon l'une quelconque des revendications 1 à 9, **caractérisé en ce que** la nervure (6) est pressée fermement contre le corps de tube (2) au moins pendant une brève période immédiatement après le soudage.

11. Tube à ailettes en métal, en particulier tube pour échangeur de chaleur, comprenant un corps de tube cylindrique (2), ainsi qu'une bande (4) enroulée en hélice sur celui-ci, laquelle est reliée à la surface du tube au moyen d'un cordon de soudure, qui est produit par un dispositif à souder électrique en utilisant un métal d'apport, **caractérisé en ce qu'**une nervure (6) s'étendant parallèlement à la surface du corps de tube est prévue sur la bande (4), **en ce que** la surface de support (10) de la nervure (6) est soudée avec la surface (3) du corps de tube, et **en ce que** le cordon de soudure (5) constitué du métal d'apport est plus étroit que la largeur de la nervure.

12. Tube à ailettes selon la revendication 11, **caractérisé en ce que** la surface de support (10) de la nervure (6) comporte un profilage.

13. Tube à ailettes selon la revendication 12, **caractérisé en ce que** des ailettes longitudinales (15) sont prévues en tant que profilage.

14. Tube à ailettes selon la revendication 12, **caractérisé en ce que** des ailettes transversales sont prévues en tant que profilage.

15. Tube à ailettes selon la revendication 12, **caractérisé en ce que** des nodules sont prévus en tant que profilage.

16. Tube à ailettes selon l'une quelconque des revendications 11 à 15, **caractérisé en ce que** la nervure (6) est pourvue d'un bombement (16) dirigé à l'opposé de sa surface de support (10).

17. Tube à ailettes selon l'une quelconque des revendications 11 à 16, **caractérisé en ce que** la bande est pliée en forme de L, la branche prévue sur la nervure formant l'ailette.

18. Tube à ailettes selon l'une quelconque des revendications 11 à 16, **caractérisé en ce que** la bande (4) est pliée en forme de U et **en ce que** les branches du U (7) prévues sur la nervure en U (6) sont agencées à distance des ailettes.

19. Tube à ailettes selon la revendication 18, **caractérisé en ce que** la distance entre deux branches du U (7) d'enroulements adjacents de la bande correspond à la distance des branches de la bande (4).
